# EUROPEAN PATENT SPECIFICATION

(11) **EP 3 451 848 B1**
(45) Date of publication and mention of the grant of the patent: **26.07.2023**
(21) Application number: 16831931.7
(22) Date of filing: 24.11.2016
(51) Int. Cl.: A23G 1/54, A23G 1/50

(54) **FIGURED EGG-SHAPED CHOCOLATE FOOD PRODUCT WHICH HAS A SUPPORTIVE NON-EDIBLE INNER HOUSING**
GEMUSTERTES, EIFÖRMIGES SCHOKOLADENNAHRUNGSPRODUKT MIT EINEM STÜTZENDEN, NICHT ESSBAREN INNENGEHÄUSE
PRODUIT ALIMENTAIRE EN CHOCOLAT EN FORME D' UF DÉCORÉ COMPORTANT UN LOGEMENT INTÉRIEUR NON COMESTIBLE DE SUPPORT

(30) Priority: 05.04.2016 TR 201604416
(43) Date of publication of application: 13.03.2019
(73) Proprietor: Solen Cikolata Gida Sanayi Ve Ticaret Anonim Sirketi, Istanbul (TR)
(72) Inventor: COBAN, Erdogan, Istanbul (TR)
(86) International application number: PCT/TR2016/050457
(87) International publication number: WO 2017/176222

(56) References cited:
- EP-A1- 1 018 302
- EP-A1- 1 110 459
- EP-A1- 1 604 573
- EP-A2- 0 951 835
- WO-A1-93/00267
- BR-A- 9 301 046
- DE-A1- 2 324 344
- DE-U1- 29 801 124
- RU-C2- 2 185 071
- ANONYMOUS: "Decoration of confectionery and chocolate items", ZUCKER-UND SUESSWARENWIRTSCHAFT, vol. 37, no. 7/8, 1984, pages 265-266, XP8183658, ISSN: 0373-0204

## Description

### TECHNICAL FIELD

The present invention relates to egg-shaped chocolate products, and particularly relates to egg-formed chocolate food products with hollow non-edible housing named as "surprise" therein.

### STATE OF THE ART

Egg-formed edible chocolate food products with hollow inner housing are obtained by taking inspiration from "Easter Egg" and by transforming this Easter Egg into chocolate form. It is obtained by means of joining two half-shells, which are made of chocolate and which are cut in the longitudinal axis, along the peripheral edges in the longitudinal axis which has thin walls like egg and which is in hollow form.

US3961089 discloses, a hollow chocolate article such as an Easter egg is formed by inverting a molded chocolate shell upon another shell in respective molds, the lower shell having been previously formed with an inner coating layer e.g., of chocolate, while the inverted upper shell is provided with an inner coating layer which is still in a fluid state when the shells are superimposed, so that some of the material of the inverted inner layer flows on to and is joined to the peripheral surface of the previously formed inner layer of the lower shell, to form an internal seam without discoloration.

The mechanical resistance of the joined thin-walled shells is low. Particularly in the chocolate egg which is joined along the distance forming the peripherally longest line of the egg form, said joining shall be sealed and shall have resistance providing substantial holding of the half-shells. The consumer opens the package encircling the egg chocolate along the outer wall thereof, and he/she exerts pressure through the tapered top section and through the round base for reaching the housing encircled by the egg, and he/she provides formation of a breakage along the joining line which is the weakest section in the chocolate egg structure. Thus, the shell halves are opened and it becomes possible to reach the housing provided therein.

EP1018302 explain a hollow chocolate body e.g. Easter egg containing a small toy or novelty has an inedible supporting shell made of two e.g. polypropylene corresponding halves with rims. Each rim has mirror-image interlocking faces by means of which the two halves are brought together or separated. The chocolate body has edible shell halves which may be removed from the inedible supporting shell. The two edible shells are held apart by an inedible separator.

EP1110459A1 discloses, the method enables food products to be manufactured which include two half-shells with their respective mouth portions coupled together. The products contain an accessory element occupying an inner volume enclosed in a wrapper. The method includes the steps of: coupling the said half-shells by arranging the said mouth portions in a condition of substantially free coupling, by establishing a temporary adhesive connection between the said accessory element and the said half-shells acting to hold them together, wrapping the thus coupled half-shells in a wrapper while the said half-shells are held together by the temporary adhesive connection to the said accessory.

EP0951835 discloses a combination edible and non-edible product which comprises a housing formed of first and second sections of plastic or other non-edible material interconnected to form a hollow interior adapted to receive a toy or other item. At least one of the first and second sections includes a radially outwardly extending rib having opposed side edges and an outer edge, and their outer surfaces each carry a layer of confectionery such as chocolate having a peripheral edge which abuts one of the side edges of the rib leaving the entire outer edge of the rib exposed and readily viewable. The entire article is then covered with a foil wrap or the like.

DE29801124U1 disclose a hollow chocolate body designed as an egg. Contained in the hollow chocolate body is a container, which is also egg-shaped. The hollow chocolate body contains only one container. The space between the hollow chocolate body and the container is kept very small in order to avoid damage to the hollow chocolate body by the container during manufacture, transport and storage.

WO9300267A1 disclose a container, which is intended to be used for inserting so-called "surprise gifts" in hollow articles such as, for example, chocolate eggs, is constituted by two half-shells each including a dome-like portion and a skirt portion. The dome-like portions are generally hemispherical and are much longer, measured axially of the container, than the corresponding skirt portions.

DE2324344 disclose parts of the container which may be mirror-images. Pref. the container is of plastics, as is the toy. The two parts of the container have interfitting slip-over edges. The toy can have several parts, e.g. a plastics chair and doll. The egg may also be cylindrical, with a chocolate crust.

### BRIEF DESCRIPTION OF THE INVENTION

The object of the present invention is to provide substantial mechanical resistance in case figurative items are added onto the thin-walled chocolate egg formed products.

In order to reach said object, the present invention is an egg-shaped chocolate food product comprising a first half-shell and a corresponding second half-shell forming a chamber inside when coupled and which encircles a non-edible inner housing placed into the chamber. A preferred embodiment of the present invention comprises a figurative section formed in the vicinity of the outer wall of the first half-shell in a manner staying inside a figurative area border defined at the section where the inner housing is supported from the rear section and provided on the first half-shell. The support provided by the inner housing forms resistance against mechanical deteriorations resulting from the figurative section on the first half-shell outer wall, and a food product is provided having figurative element thereon and which is resistant to the forces formed during transport.

In a preferred embodiment of the invention, the first half-shell and the second half-shell are cut in the longitudinal axis. Thus, after the joining process, the user can easily open the half-shells. The figurative section is directly integrated to the outer wall of the first half-shell. In this case, the figurative section becomes permanent on the outer shell, and it is protected against being erased or damaged due to various reasons. The figurative section at least partially comprises a recess inside the figurative area border provided. The recess provides formation of the figure in a rapid manner with the help of a mold, by means of a laser process or a similar abrasion method. Moreover, in case the egg form is encircled by means of aluminum or a similar foil, the foil preserves the tension and covers the recess and a package deformation, which is going to deform the package integrity due to the recess, does not occur. In alternative embodiments, the figurative section may comprise recesses, protrusions or different colorized sections and the combination of these in a manner providing visual integrity. In a preferred application, the figurative section is obtained by means of molding with the first half-shell.

In a preferred application, the figurative section is provided in an intermediate section of the egg form. This forms the safest area where the inner housing provides support when the gaps, formed at the upper side and the lower side, are taken into consideration particularly when the inner housing sits on the egg form. In order to provide support, a lateral edge of the inner housing at least partially contacts the inner wall of the first half-shell. Thus, support is formed by exerting pressure from the inner wall against mechanical resistance deterioration formed on the outer wall of the egg and the figurative section. The figurative section has a face structure. This face may comprise eyes, mouth, tongue, hair, nose, eyebrows, eyelashes, eye lid, chin or the skin spots, accessories like hat, letters, numbers, geometric items and similar support figures. Moreover, the form of the face may be formed in a manner reflecting emotional conditions like smiling face, angry face, surprised face and similar emotional conditions. The form of the face creates tension areas which are substantially equally distributed in a manner substantially supported by the support element in the first half-shell. The figurative section is provided by means of the deformation of the first half-shell. The figurative area border is defined by the projection of the outer line of the inner housing onto the first half-shell. This area border provides a substantially supported operation area to a designer. The figurative area border is delimited by a predetermined distance in a manner providing a gap for an upper section and a lower section of the first half-shell. The figurative area border facilitates molding on the wide radial surfaces by means of being approached to the intermediate section. Moreover, the figurative area border provides facility in terms of molding on wide radial surfaces. The figurative section is extended between the upper section and the lower section in a distanced manner. In a preferred embodiment of the present invention, a joining line is provided which peripherally joins the first half-shell and the second half-shell. The inner housing is made of plastic material. This plastic is suitable for the food standards.

### BRIEF DESCRIPTION OF THE FIGURES

In Figure 1, the representative cross sectional view of the subject matter egg-formed chocolate product where the chocolate product is placed to an inner housing is given.
In Figure 2, the frontal representative view of a first half-shell of the chocolate product, illustrated in Figure 1, is given such that an imaginary line which is the projection of the inner housing is provided.
In Figure 3, the frontal representative view of the chocolate product illustrated in Figure 1 is given.

### DETAILED DESCRIPTION OF THE INVENTION

In this detailed description, the subject matter improvement is explained with references to examples without forming any restrictive effect only in order to make the subject more understandable.

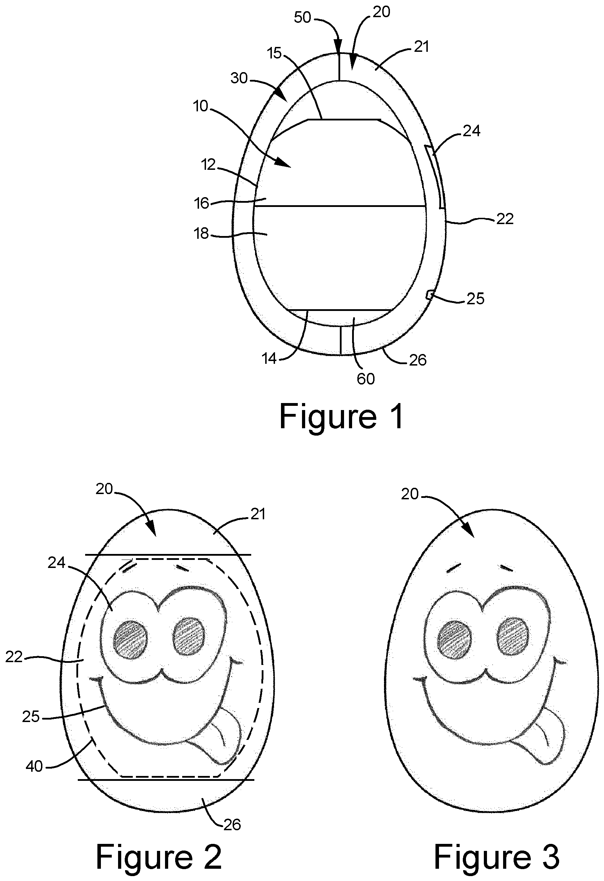

In Figure 1, the cross sectional view of an egg-formed food product which is made of thin-walled chocolate is given. A first half-shell (20) and a second half-shell (30) which is vertically symmetrical with respect to said first half-shell (20) are coupled such that their open mouths face each other, and thereby they create the egg form. The space, remaining at the inner sections of the first and second half-shells (20, 30), provides a chamber (60). An inner housing (10) sits inside the chamber (60). The inner housing (10) has a capsule-like structure and it is placed such that a gap remains between a lower base (14) and an upper ceiling (15) due to the egg-like structure of the chamber (60) which narrows towards the ends. The lateral edge (12) of the inner housing (20) contacts the first half-shell (20) and the second half-shell (30) from the inner wall, and it supports the egg form against the tensions which may be applied from outside. The inner housing (10) consists of an upper piece (16) and a similar lower piece (18) mounted to each other in an openable and engaged manner.

The first half-shell (20) and the second half-shell (30) are joined along a peripheral joining line (50) passing through the middle of the top section and the base. The joining line (50) forms the weakened line of the egg when compared with the other sections.

In Figure 2 and Figure 3, the frontal view of the egg product is given. A figurative section (24), which is smiley form, is centered on the outer wall of the first half-shell (20). The figurative section (24) is extended along the long axis of the first half-shell (20). The figurative section (24) is in the form of two eyes joined through the facing sections at the upper section, and it is in the form of a mouth placed under the eyes. The figurative section (24), consisting of the face, is placed in a manner staying inside a figurative area border (40) delimited by the projection of the inner housing (10) onto the first half-shell (20) in a manner supporting from the inner wall of the first half-shell (20). The figurative area border (40) is delimited in a distanced manner from the top by means of an upper section (21) extending downwardly from a tapered top section of the egg, and it is delimited in a distanced manner from the bottom by means of a lower section (26) extending upwardly from the round bottom. Thus, there is no figurative section (24) at the projection sections corresponding in the first half-shell (20) for the empty sections of the chamber (60) except the inner housing (10). However, for instance, there is visual integrity with a simple line or a figurative section (24), and besides, a little areal section may be provided outside of the figurative area border (40). The figurative area border (40) defines the section where the figurative section (24) is predominantly placed on the first half-shell (20).

The figurative section (24) is in the form of a recess formed by means of molding the first half-shell (20). Thus, the figurative section (24) has a form which is integrated to the outer wall of the first half-shell (20).

### REFERENCE NUMBERS

| | | | |
|---|---|---|---|
| 10 | Inner housing | 25 | Recess |
| 12 | Lateral edge | 26 | Lower section |
| 14 | Base | 30 | Second half-shell |
| 15 | Ceiling | 40 | Figurative area border |
| 16 | Upper part | 50 | Joining line |
| 18 | Lower part | 60 | Chamber |
| 20 | First half-shell | | |
| 21 | Upper section | | |
| 22 | Intermediate section | | |
| 24 | Figurative section | | |

## Claims

1. An egg-shaped chocolate food product comprising a first half-shell (20) and a corresponding second half-shell (30) forming a chamber (60) inside when coupled and which encircles a non-edible inner housing (10) placed into the chamber (60), **characterized by** comprising a figurative section (24) formed in the vicinity of the outer wall of the first half-shell (20) in a manner staying inside a figurative area border (40) defined at the section where the inner housing (10) is supported from the rear section and provided on the first half-shell (20).

2. A food product according to claim 1, wherein the first half-shell (20) and the second half-shell (30) are cut in the longitudinal axis.

3. A food product according to any of the preceding claims, wherein the figurative section (24) is directly integrated to the outer wall of the first half-shell (20).

4. A food product according to claim 3, wherein the figurative section (24) at least partially comprises a recess (25) inside the figurative area border (40) provided.

5. A food product according to claim 3 or 4, wherein the figurative section (24) is obtained by means of molding with the first half-shell (20).

6. A food product according to any of the preceding claims, wherein the figurative section (24) is provided in an intermediate section (22) of the egg form.

7. A food product according to any of the preceding claims, wherein in order to provide support, a lateral edge (12) of the inner housing (10) at least partially contacts the inner wall of the first half-shell (20).

8. A food product according to any of the preceding claims, wherein the figurative section (24) is in the form of a face.

9. A food product according to any of the preceding claims, wherein the figurative section (24) is provided by means of the deformation of the first half-shell (20).

10. A food product according to any of the preceding claims, wherein the figurative area border (40) is defined by the projection of the outer line of the inner housing (10) onto the first half-shell (20).

11. A food product according to any of the preceding claims, wherein the figurative area border (40) is delimited by a predetermined distance in a manner providing a gap for an upper section (21) and a lower section (26) of the first half-shell (20).

12. A food product according to claim 11, wherein the figurative section (24) is extended in a distanced manner between the upper section (21) and the lower section (26).

13. A food product according to any of the preceding claims, wherein a joining line (50) is provided which peripherally joins the first half-shell (20) and the second half-shell (30).

14. A food product according to claim 11, wherein the inner housing (10) is made of plastic material.

## Patentansprüche

1. Ein eiförmiges Schokoladen-Konfektprodukt, bestehend aus einer ersten Halbschale (20) und einer entsprechenden zweiten Halbschale (30), die bei Kopplung eine Kammer (60) im Inneren bildet und die ein nicht essbares Innengehäuse (10) umschließt, das in der Kammer (60) platziert ist, **gekennzeichnet durch** einen figurativen Abschnitt (24), der in der Nähe der Außenwand der ersten Halbschale (20) in einer Weise gebildet ist, dass er innerhalb einer figurativen Bereichsgrenze (40) bleibt, die an dem Abschnitt definiert ist, an dem das Innengehäuse (10) von dem hinteren Abschnitt gestützt und auf der ersten Halbschale (20) vorgesehen ist.

2. Ein Konfektprodukt nach Anspruch 1, wobei die erste Halbschale (20) und die zweite Halbschale (30) in der Längsachse geschnitten sind.

3. Ein Konfektprodukt nach einem der vorhergehenden Ansprüche, wobei der figurative Abschnitt (24) direkt in die Außenwand der ersten Halbschale (20) integriert ist.

4. Ein Konfektprodukt nach Anspruch 3, wobei der figurative Abschnitt (24) zumindest teilweise eine Vertiefung (25) innerhalb der vorgesehenen figurativen Bereichsgrenze (40) umfasst.

5. Ein Konfektprodukt nach Anspruch 3 oder 4, wobei der figurative Abschnitt (24) durch Formen mit der ersten Halbschale (20) erzielt wird.

6. Ein Konfektprodukt nach einem der vorhergehenden Ansprüche, wobei der figurative Abschnitt (24) in einem Zwischenabschnitt (22) der Eiform vorgesehen ist.

7. Ein Konfektprodukt nach einem der vorhergehenden Ansprüche, wobei zur Unterstützung eine seitliche Kante (12) des Innengehäuses (10) zumindest teilweise die Innenwand der ersten Halbschale (20) berührt.

8. Ein Konfektprodukt nach einem der vorhergehenden Ansprüche, wobei der figurative Abschnitt (24) in Form eines Gesichts ist.

9. Ein Konfektprodukt nach einem der vorhergehenden Ansprüche, wobei der figurative Abschnitt (24) durch Verformung der ersten Halbschale (20) bereitgestellt wird.

10. Ein Konfektprodukt nach einem der vorhergehenden Ansprüche, wobei die figurative Bereichsgrenze (40) durch die Projektion der äußeren Linie des Innengehäuses (10) auf die erste Halbschale (20) definiert ist.

11. Ein Konfektprodukt nach einem der vorhergehenden Ansprüche, wobei die figurative Bereichsgrenze (40) durch einen vorbestimmten Abstand abgegrenzt ist, um einen Spalt für einen oberen Abschnitt (21) und einen unteren Abschnitt (26) der ersten Halbschale (20) zu schaffen.

12. Ein Konfektprodukt nach Anspruch 11, wobei der figurative Abschnitt (24) auf Abstand zwischen dem oberen Abschnitt (21) und dem unteren Abschnitt (26) erweitert ist.

13. Ein Konfektprodukt nach einem der vorhergehenden Ansprüche, wobei eine Verbindungsleitung (50) vorgesehen ist, die die erste Halbschale (20) und die zweite Halbschale (30) umlaufend verbindet.

14. Ein Konfektprodukt nach Anspruch 11, wobei das Innengehäuse (10) aus Kunststoffmaterial besteht.

## Revendications

1. Un produit alimentaire en chocolat en forme d'oeuf comprenant une première demi-coquille (20) et une deuxième demi-coquille correspondante (30) formant une chambre (60) à l'intérieur lorsqu'elles sont accouplées et qui encercle un logement interne non comestible (10) placé dans la chambre (60), **caractérisé par** une section figurative (24) formée à proximité de la paroi extérieure de la première demi-coquille (20) de manière à rester à l'intérieur d'une bordure de zone figurative (40) définie à l'endroit où le logement interne (10) est soutenu depuis la section arrière et situé sur la première demi-coquille (20).

2. Un produit alimentaire selon la revendication 1, dans lequel la première demi-coquille (20) et la deuxième demi-coquille (30) sont coupées dans l'axe longitudinal.

3. Un produit alimentaire selon l'une quelconque des revendications précédentes, où la section figurative (24) est directement intégrée à la paroi extérieure de la première demi-coquille (20).

4. Un produit alimentaire selon la revendication 3, où la section figurative (24) comprend au moins partiellement un renfoncement (25) à l'intérieur de la bordure de la zone figurative (40) prévue.

5. Un produit alimentaire selon la revendication 3 ou 4, où la section figurative (24) est obtenue par moulage avec la première demi-coquille (20).

6. Un produit alimentaire selon l'une quelconque des revendications précédentes, où la section figurative (24) est prévue dans une section intermédiaire (22) de la forme d'oeuf.

7. Un produit alimentaire selon l'une quelconque des revendications précédentes, où, pour fournir un support, un bord latéral (12) du logement interne (10) est en contact au moins partiellement avec la paroi interne de la première demi-coquille (20).

8. Un produit alimentaire selon l'une quelconque des revendications précédentes, où la section figurative (24) est en forme de visage.

9. Un produit alimentaire selon l'une quelconque des revendications précédentes, où la section figurative (24) est prévue par déformation de la première demi-coquille (20).

10. Un produit alimentaire selon l'une quelconque des revendications précédentes, où la bordure de la zone figurative (40) est définie par la projection de la ligne extérieure du logement interne (10) sur la première demi-coquille (20).

11. Un produit alimentaire selon l'une quelconque des revendications précédentes, où la bordure de la zone figurative (40) est délimitée par une distance prédéterminée de manière à ménager un espace pour une section supérieure (21) et une section inférieure (26) de la première demi-coquille (20).

12. Un produit alimentaire selon la revendication 11, où la section figurative (24) est étendue de manière espacée entre la section supérieure (21) et la section inférieure (26).

13. Un produit alimentaire selon l'une quelconque des revendications précédentes, où une ligne de jonction (50) est prévue qui relie périphériquement la première demi-coquille (20) et la deuxième demi-coquille (30).

14. Un produit alimentaire selon la revendication 11, où le logement interne (10) est fait de matériau plastique.
